# EUROPEAN PATENT APPLICATION

(11) **EP 1 508 839 A2**
(43) Date of publication of application: **23.02.2005**
(21) Application number: 04103987.6
(22) Date of filing: 19.08.2004
(51) Int. Cl.: G03G 15/00, B41J 3/60, H04N 1/00

(54) **Sheet-feeding apparatus**

(30) Priority: 19.08.2003 KR 2003057280
(71) Applicant: Samsung Electronics Co., Ltd., Suwon-city, Kyungki-do (KR)
(72) Inventor: LEE, Seung-jae, Yeongtong-gu, Suwon-si, Gyeonggi-do (KR)
(74) Representative: Read, Matthew Charles

(57) **Abstract**

Provided is an automatic document feeder (ADF) that includes an inner curved guide (115) and an outer curved guide (116) that are semicircular and guide a document between a separation roller (113) and a convey roller (117) along a document conveying path, and at least one idle roller (130) that is rotatably installed at the inner curve guide (115). When the document passes between the convey roller (117) and the separation roller (113), the document is maintained in an evenly tensed state while proceeding toward the scanning region by reducing a frictional force between the inner curve guide (115) and the document, thus improving scanning quality.

## Description

The present invention relates to a sheet-feeding apparatus comprising, a first feeder for feeding a sheet along a sheet-feeding path, inner and outer curved members disposed along the sheet-feeding path, the curved members being spaced apart so as to receive a sheet therebetween, and a second feeder for feeding a sheet from between the curved members.

Devices having a copying function, such as copier and facsimile machines, as well as multi-function devices, typically include an automatic document feeder (ADF). The ADF enables individual sheets of multiple page documents to be supplied one by one, automatically, without opening and closing a platen cover that covers a copying region, thus reducing the time required for a copying or scanning operation.

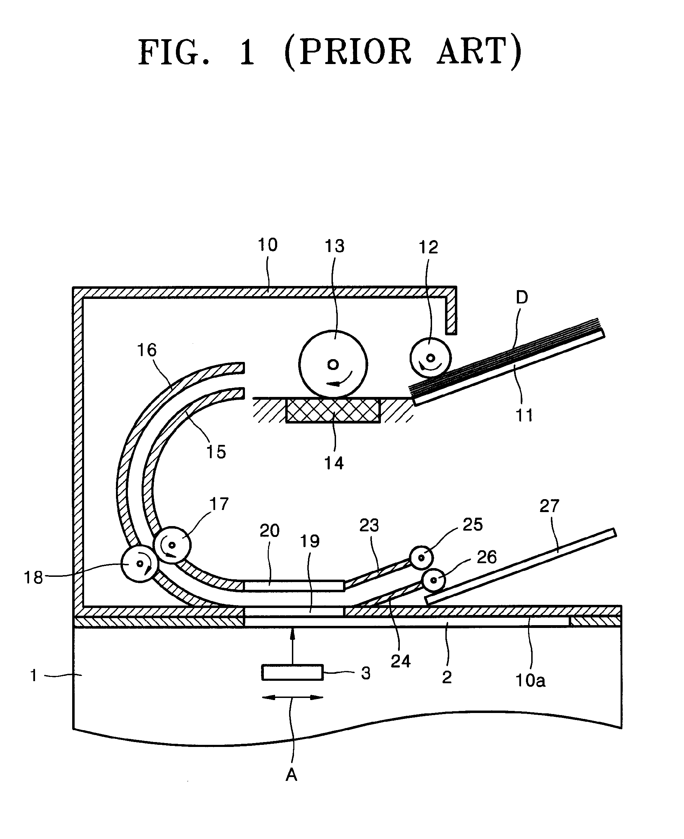

Figure 1 is a side view of a conventional ADF. Referring to Figure 1, the conventional ADF 10 comprises an input tray 11, on which documents D to be supplied to a scanning region are stacked, a pickup roller 12 that supplies the documents D stacked on the input tray 11 to the scanning region one by one, and a separation roller 13 and a friction pad 14 that prevent more than one sheet from being transmitted. The ADF 10 further includes an inner curved guide 15 and an outer curved guide 16 that change a proceeding direction of the sheet input by the separation roller 13, a conveyor roller 17 at the inner curved guide 15 for conveying the document and a pinch roller 18 at the outer curved guide 16 driven by the conveyor roller 17 while pressing the conveyor roller 17. A glass plate 19 and a white block 20 form the scanning region at the outlet of the guides 15, 16 and a path through which the document passes. Guide plates 23, 24 guide the scanned document to a discharge roller 25 and a pinch roller 26 that discharge the document out of the ADF 10. Finally, the ADF includes an output tray 27 on which the discharged document is stacked.

A scanning device 1, such as a scanner or a copying machine, is typically disposed below the ADF 10 and a glass plate 2 is disposed on an upper portion of the scanning device 1. An image device 3 is disposed under the glass plate 19 and scans a surface of the document on which information is recorded. A lower surface of the ADF 10 functions as a platen cover 10a that covers the glass plate 2 of the scanning device 1.

When the ADF 10 is in use, the image device 3 performs a scanning operation and scans the surface of the document when the document is passed between the glass plate 19 and the white block 20 by the ADF 10. When the ADF 10 is not in use and a user opens the platen cover 10a, places the document on the glass plate 2 and closes the platen cover 10a to scan the document, the image device 3 performs the scanning operation by moving along the direction of arrow A in Figure 1.

When the pickup roller 12 is rotated by a motor (not shown) in the ADF 10, the uppermost sheet contacting the pickup roller 12 among the documents stacked on the input tray 11 is picked up and pushed into the document conveying path. The sheet contacted by the separation roller 13 on the document conveying path enters into the document conveying path. If two or more sheets are picked up, only the uppermost document is allowed to enter the document conveying path because of the friction pad 14. The document is guided by the inner and outer curved guides 15, 16. The document is passed between the inner and outer curved guides 15, 16 by the conveyor roller 17 and enters the scanning region. The document is scanned by the image device 3, which is located under the glass plate 19 at the scanning region, and then discharged out of the ADF 10 by the discharge roller 25 after passing through the guide plates 23, 24. The document is then discharged onto the output tray 27. In the conventional ADF 10, the document conveying path inevitably includes a curved section, and the radius of the curved section is reduced in order to reduce the size of the ADF 10. Also, a linear velocity of the conveyor roller 17 is faster than that of the separation roller 13 and thus the document is smoothly moved between the inner and outer curved guides 15, 16.

However, because the linear velocity of the conveyor roller 17 is faster than that of the separation roller 13, the document is in a stressed state between the conveyor roller 17 and the separation roller 13 and the document frictionally contacts a surface of the inner curved guide 15 when passing between the inner and outer curved guides 15, 16. Since the document is affected by a frictional force of the inner curve guide 15, the document conveying operation is not performed uniformly. Therefore, the period of time that it takes for the document to pass over the scanning region may vary, which can have a negative effect on the resulting document image.

In order to solve the above problem, an additional conveyor roller and pinch roller can be installed at the curve guides 15, 16, however, this complicates the operation and the curvatures of the curve guides 15, 16 must be increased due to the additional rollers, thus increasing the size of the ADF 10.

It is an aim of the present invention to provide an automatic document feeder (ADF) that improves image quality by reducing a frictional force between a curved guide and a document in order to maintain a constant feeding speed of the documents.

A sheet-feeding apparatus, according to the present invention, is characterised by at least one roller disposed on the inner curved member in the sheet-feeding path between the first and second feeders.

Preferably, the axis of the at least one roller is perpendicular to the sheet feeding path.

Preferably, the apparatus comprises, in respect of a particular distance along the sheet-feeding path, a single roller being mounted on a shaft. The inner curved guide may comprise a recess or a hole and the roller may be mounted to protrude therefrom into the sheet-feeding path.

Alternatively, the apparatus comprises, in respect of a particular distance along the path, plural rollers mounted on a common shaft. The inner curved guide may comprise a plurality of holes or a recess and the rollers may be mounted to protrude therefrom into the sheet-feeding path.

Preferably, the apparatus comprises two or more rollers disposed on the inner curved member at different distances along the sheet-feeding path.

Embodiments of the present invention will now be described, by way of example, with reference to Figures 2 to 4 of the accompanying drawings, in which:
Figure 1 is a side view of a conventional automatic document feeder (ADF);
Figure 2 is a side view of an example of an ADF according to the present invention;
Figure 3 is a cross-sectional view of an example of the idle roller in Figure 2 according to the present invention; and
Figure 4 is a cross-sectional view of another example of the idle roller in Figure 2 according to the present invention.

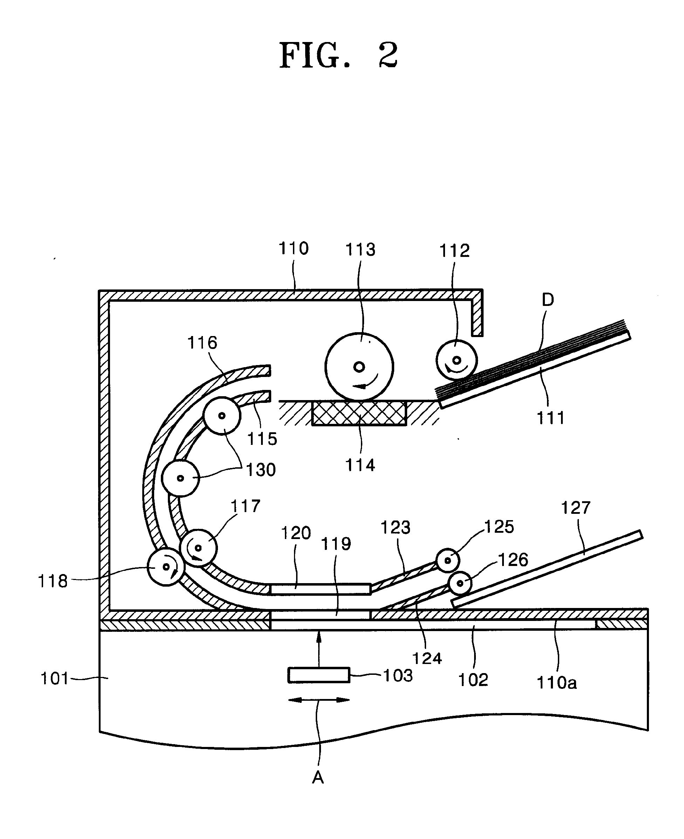

Referring to Figure 2, the ADF 110 comprises an input tray 111, on which documents D are stacked and a pickup roller 112 that supplies the documents D stacked on the input tray 111 to the scanning region one sheet at a time. It also comprises a separation roller 113 and a friction pad 114 that prevent more than one sheet from being transmitted. The ADF 110 also includes an inner curved guide 115 and an outer curved guide 116 that guide the document input by the separation roller 113. It also comprises at least one idle roller 130, that reduces a frictional force when the document contacts the inner curved guide 115, a conveyor roller (or convey roller) 117, that forces the document to proceed along the inner curved guide 115, and a pinch roller 118 that is driven by the conveyor roller 117 while pressing the conveyor roller 117 with a predetermined pressure. The ADF 110 also includes a glass plate 119 and a white block 120, that form the scanning region where the document exits the inner and outer curved guides 115, 116, and a path, through which the document passes, guide plates 123, 124, that guide the scanned document to be discharged out of the ADF 110, a discharge roller 125 and a pinch roller 126, that discharge the document out of the ADF 110 and an output tray 127 on which the discharged documents are stacked. A scanning device 101, such as a scanner or a copying machine, is preferably disposed below the ADF 110 and a glass plate 102 is disposed on an upper portion of the scanning device 101. An image device 103 is disposed under the glass plate 102 to scan a surface of the document on which information is recorded. A lower surface of the ADF 110 is a platen cover 110a that covers the glass plate 102 of the scanning device 101.

When the document is transmitted by the ADF 110, the image device 103 scans a surface of the document when the document is passed between the glass plate 119 and the white block 120 by the ADF 110. When a document is manually placed onto the glass 102 to be scanned without using the ADF 110, a user opens the platen cover 110a, places the document on the glass plate 102 and closes the platen cover 110a to scan the document, and the image device 103 performs the scanning operation by moving along the direction of arrow A in Figure 2.

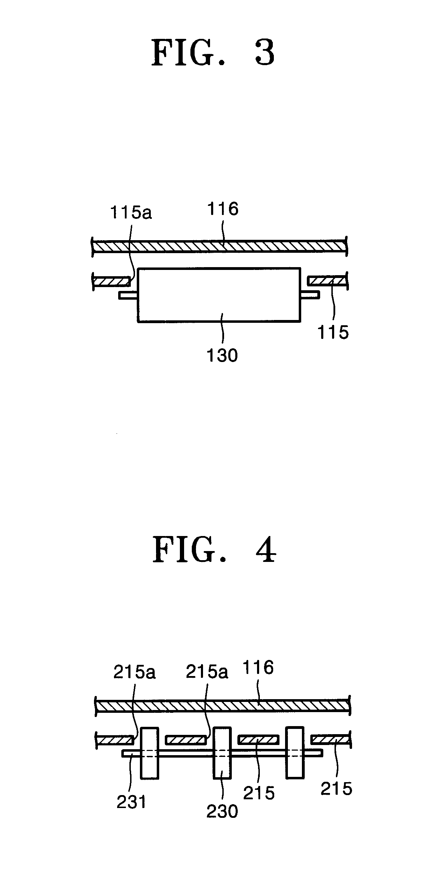

Referring to Figure 3, the inner curved guide 115 has a slot or hole 115a perpendicular to the document conveying path. A cylindrical idle roller 130 is installed at the hole 115a and protrudes from the surface of the inner curved guide 115 toward the outer curved guide 116 to a predetermined height. The idle roller 130 prevents the document passing between the inner and outer curved guides 115 and 116 from directly contacting the inner curved guide 115, thereby reducing the frictional force between the document and the inner curved guide 115. The idle roller 130 is supported by the main body of the ADF 110 or the inner curved guide 115 such that it can rotate. It is preferable that the idle roller 130 is formed of plastic or any other suitable material having a low coefficient of friction.

The inner and outer curved guides 115, 116 have a predetermined curvature. The idle roller 130 is disposed at the document conveying path between the conveyor roller 117 and the separation roller 113 and ensures that the document proceeds with an evenly distributed stress by reducing the frictional force the document experiences when passing between the conveyor roller 117 and the separation roller 113.

The idle roller 130 is installed at the hole 115a, however, a recess (not shown) having a same shape as the hole 115a may instead be formed in the inner curved guide 115, and the idle roller 130 may be installed in the recess.

Operations of the ADF 110 having the above-described structure will now be described with reference to Figures 2 and 3.

When the pickup roller 112 is rotated by a motor (not shown), the uppermost sheet contacting the pickup roller 112 among the documents mounted on the input tray 111 is picked up and pushed into the document conveying path. The document contacting the pickup roller 112 is conveyed along the document conveying path by the separation roller 113. If two or more sheets are picked up, sheets below the uppermost sheet are prevented from entering the document conveying path by the friction pad 114. The document is guided along the document conveying path by the inner and outer curved guides 115, 116. The document is conveyed between the curve guides 115, 116 by the separation roller 113 toward the conveyor roller 117 and the pinch roller 118. If a linear velocity of the convey roller 117 is faster than that of the separation roller 113, the document between the convey roller 117 and the separation roller 113 is in a stressed state and a surface of the document advantageously contacts the idle roller 130 rather than the surface of the inner curved guide 115. Since the idle roller 130 rotates with the document, the document can pass through the inner and outer curved guides 115, 116 at a constant speed and enter the scanning region without experiencing a frictional force due to contact with the inner curve guide 115 in the region near the roller 130. The document is then scanned by the image device 103 under the glass plate 119, passes between the guide plates 123, 124, and is discharged out of the ADF 110 by the discharge roller 125 and discharged onto the output tray 127.

Referring to Figure 4, a plurality of slots or holes 215a are formed in the inner curved guide 215 perpendicular to the document conveying path and a shaft 231 is installed in the holes 215a perpendicular to the document conveying path. In addition, a plurality of cylindrical idle rollers 230 having predetermined lengths are installed on an outer circumference of the shaft 231 and protrude from the surface of the inner curved guide 215 toward the outer curved guide 116. The idle rollers 230 prevent the document that passes between the inner and outer curved guides 215, 116 from directly contacting the inner curved guide 215, thereby reducing the frictional force between the document and the inner curved guide 215. The idle rollers 230 are supported by the main body of the ADF 110 or the inner curved guide 215 such that they can rotate. It is preferable that the idle rollers 230 are formed of plastic or any other suitable material having a low coefficient of friction.

The idle rollers 230 are disposed along the document conveying path between the conveyor roller 117 and the separation roller 113 and ensure that the document proceeds with an evenly distributed stress by reducing the frictional force between the document and the inner curved guide 115.

As described above, an ADF is provided which reduces the frictional force between the inner surface of the curve guide and the document, while maintaining the tensed state of the document between the convey roller and the separation roller, thus allowing the document to proceed toward the scanning region with a more constant speed and consequent improved scanning quality. Also, the curvatures of the curved guides can be reduced, thus reducing the size of the ADF.

## Claims

1. A sheet-feeding apparatus comprising:
a first feeder (113) for feeding a sheet along a sheet-feeding path;
inner and outer curved members (115, 116) disposed along the sheet-feeding path, the curved members (115, 116) being spaced apart so as to receive a sheet therebetween; and
a second feeder (117, 118) for feeding a sheet from between the curved members (115, 116),
**characterised by** at least one roller (130) disposed on the inner curved member (115) in the sheet-feeding path between the first and second feeders (113, 117,118).

2. An apparatus according to claim 1, wherein the axis of the at least one roller (130) is perpendicular to the sheet feeding path.

3. An apparatus according to claim 2, comprising, in respect of a particular distance along the sheet-feeding path, a single roller being mounted on a shaft.

4. An apparatus according to claim 3, wherein the inner curved guide (115) comprises a recess or a hole (115a) and the roller (130) is mounted to protrude therefrom into the sheet-feeding path.

5. An apparatus according to claim 1 or 2, comprising, in respect of a particular distance along the path, plural rollers (230) mounted on a common shaft (231).

6. An apparatus according to claim 5, wherein the inner curved guide (215) comprises a plurality of holes (215a) or a recess and the rollers (230) are mounted to protrude therefrom into the sheet-feeding path.

7. An apparatus according to any preceding claim, comprising two or more rollers (130) disposed on the inner curved member (115) at different distances along the sheet-feeding path.

8. An automatic document feeder comprising:
a separation roller that moves the document into a document conveying path;
an inner curved guide and an outer curved guide that are semicircular and change a conveying direction of the document conveyed along the document conveying path;
a convey roller, which conveys the document, installed on the inner curved guide; and
at least one idle roller that is rotatably installed at the inner curved guide in order to facilitate motion of the document between the separation roller and the convey roller.

9. The automatic document feeder of claim 8, wherein the idle roller is installed in a hole or a recess of the inner curved guide, to be perpendicular to the document conveying path.

10. The automatic document feeder of claim 9, wherein the idle roller protrudes from a surface of the inner curved guide toward the outer curved guide.

11. The automatic document feeder of claim 8, further comprising:
a shaft that is fixedly installed in a plurality of holes or a recess formed perpendicular to the document conveying path at the inner curve guide,
wherein the idle roller comprises a plurality of rollers that are rotatably installed on an outer circumference of the shaft.

12. The automatic document feeder of claim 11, wherein the plurality of rollers protrude from a surface of the inner curved guide toward the outer curved guide.

13. The automatic document feeder of claim 8, further comprising a pickup roller that picks up an uppermost sheet among stacked documents, and conveys the sheet to the separation roller.

14. The automatic document feeder of claim 8, further comprising a glass plate forming a scanning region over which the document passes after passing between the inner and outer curved guides; and a discharge roller that discharges the document after passing over the scanned region.
